# EUROPEAN PATENT SPECIFICATION

(11) **EP 2 328 410 B1**
(45) Date of publication and mention of the grant of the patent: **07.10.2015**
(21) Application number: 09788424.1
(22) Date of filing: 18.08.2009
(51) Int. Cl.: A01K 61/00, A01K 63/04

(54) **Method and device for cleaning a water environment of sludge, in particular an aquarium, miniature decorative pond, or oceanarium**
Verfahren und Vorrichtung zum Entfernen von Schlamm aus einer Wasserumgebung, insbesondere einem Aquarium, Minizierbecken oder Ozeanarium
Procédé et dispositif de nettoyage de boue d'un milieu aquatique, en particulier un aquarium, un bassin décoratif miniature ou un océanarium

(30) Priority: 18.08.2008 PL 38589108; 20.07.2009 PL 38857309
(43) Date of publication of application: 08.06.2011
(73) Proprietor: Kaczor, Marek, 31-444 Krakow (PL); Matoga, Lukasz, 31-452 Krakow (PL); Smolarek, Kazimiera, 30-334 Krakow (PL)
(72) Inventor: KACZOR, Marek, 31-444 Krakow (PL)
(74) Representative: Kacperski, Andrzej
(86) International application number: PCT/PL2009/050022
(87) International publication number: WO 2010/021558

(56) References cited:
- WO-A1-81/01526
- FR-A1- 2 413 876
- US-A- 5 582 719

## Description

The invention concerns a method for cleaning a water environment of sludge and a device for cleaning a water environment of sludge, in particular an aquarium, miniature decorative pond, or oceanarium.

### Background of the invention

Known methods of cleaning a water environment base upon an idea of straining out impurities from water with strainers or filtering beds formed from sponge or other materials, like synthetic non-woven fabrics or activated carbon; or base upon the floatation idea, that is removing impurities together with foam resulting from entering and diffusing air or another gas into water.

Filters located internally or externally in relation to the tank or basin of the water environment cleaned are used for methods based upon straining out. Filters arrest and collect mechanical parts occurring in water, like sludge, small fish, snails, life feed intentionally released into the environment, and plankton desirable in the environment. Often a filtration bed constitutes a desirable biochemical microbiological activity carrier, transforming onerous impurities (physical or chemical) dissolved in water into harmless or less onerous substances.

Foam skimmers are used for floatation methods. Thanks to foam forming, separating and carrying away, occurring in these devices, they remove main hydrophobic components from the environment cleaned. Hydrophobic components show affinity to the water-gas boundary surface. There are mainly high-molecular soluble substances like waste proteins and microorganisms, in particular bacteria.

GB 727459 presents a device for removing sludge from the bottom of an aquarium tank. It strains out water-borne objects from water, forcing passage of water through a filtration bag made of a water permeable fabric. The bag arrests sludge and living organisms borne by the water stream. At the bottom the bag is attached to a vertical pipe performing the mechanical, load-bearing and connecting function for the filtration bag and the water driving unit. The water driving unit consists of a vertical pipe. A compressed air tube has its outlet in this pipe. Under the air tube outlet the vertical pipe extends towards the tank bottom, where its intake sucks water in, together with impurities and living organisms, which should stay in the environment. Sludge along with living organisms is sucked in through the pipe inlet and falls into the filtration bag, and the living organisms are trapped in the filtration bag. The bottom end of the filtration bag is closed with a stiff clip.

The sludge arrested in filters causes their blocking and clogging, which entails the need for frequent labour-intensive replacements or regenerations (e.g. by laundering, rinsing in separate appliances) of strainers or filter beds. The sludge arrested in a filter still has an impact on the environment as the water passing through the filter is in a constant contact with this sludge. The effect of arresting in the filter of such objects as small fish and snails or intentionally released feed for animals living in the environment cleaned is disastrous as it often causes degeneration of creatures trapped in the water environment. Usefulness of foam skimmers for sludge removal from the water environment cleaned is insignificant.

As it is impossible to remove sludge by filters and foam skimmers with adequate efficiency, maintaining a sludge free condition of an environment requires a separate labour-intensive care, consisting in manual cleaning of sludge from the bottom with an appliance sucking in water, which is a water equivalent to vacuum cleaning.

There is known from WO81/01526 an apparatus for separating excrement and waste feed in a pisciculture cistern which is preferably continuously supplied with water recirculated through the cistern and apparatus. The apparatus includes a container in which a first pipe projects, so that the opening of the pipe is under the water level in the container and suitably at a distance from the central axis of the container, contaminated water being discharged into the container through said pipe. A second substantially vertical pipe is arranged inside the container and has a larger cross section than the first pipe, an upper end which is closed or opens out above the water surface in the container and a lower end which opens out between the bottom of the container and said opening on the first pipe, in that a third discharge pipe thrusts into the container and has a water discharging opening and that the openings of the first and third pipes are separated from each other by a substantially vertical wall on the second pipe so that the water flowing out of the opening of the first pipe is forced to pass under said wall after separating from the contaminants settled on the bottom of the container and subsequently upwards before it is taken into the third pipe.

US 5 582 719 discloses a filtration system comprising a housing whose overall surface, excepting a bottom surface and an upper surface, is tightly closed, a filter medium disposed within the housing, an air jetting portion disposed within the housing at a higher location than the filter medium, and a propeller fan disposed at an upper portion of the housing and rotated by air which is jetted from the air jetting portion.

The non-filtered water drawn into the introduction sleeve ascends within the introduction sleeve. Since the upper end portion of the introduction sleeve is open toward the filter medium receiving portion in the area in the vicinity of the lower surface of the filter medium receiving portion, those particulates having comparatively larger diameters, contained in the non-filtered water, hit the collision surface of the container body of the filter medium receiving portion where the through-holes are not formed and fall back toward the precipitation portion. Since almost no water flow exists at the area of the precipitation portion, the corruption factors, which have hit and fall back, are precipitated in the precipitation portion and deposited there and condensed with the passage of time. The corruption factors separated from the water in the water tank are taken into the filtration system and pooled.

### Disclosure of the invention

The objective of the invention is to enable efficient removal of sludge from a water environment at a small effort and at the same time to save biotical environment components, such as small fish, snails, plankton or live feed added to water. In other words the objective is to remove sludge in a maintenance free, automatic and non-invasive manner. The objective of the invention is also to develop a device for a non-invasive method of cleaning a water environment of sludge.

A method of cleaning a water environment of sludge according to the invention is disclosed in claim 1.

A device according to the invention is disclosed in claim 3.

Preferred embodiments are set out in the dependent claims.

An advantageous effect of the method is the solution to the problem of cleaning of sludge a water environment, in particular a decorative miniature pond, aquarium or oceanarium, in a non-invasive manner. Non-invasiveness in this case means lack of destruction and reduction in losses of desirable biotic components of the environment, such as small animals, desirable plankton suspended in water and others. It is fundamental particularly for marine fish keeping or animal breeding in oceanaria, as keeping plankton eating animals in captivity is difficult or even impossible, as water needs to be cleaned of sludge by filters with a side-effect of catching biotic components suspended in water by the same filters. Meanwhile, filter feeders are indeed the main dissimilarity and attraction of marine environments. They are plankton eating animals, like sponges, jelly-fish, whale sharks etc. So far they have been beyond the reach of breeding techniques, or breeding of some of them has been possible, albeit difficult.

An advantageous effect of the device according to the invention is its simple design, enabling a stable operation of the cleaning process of a water environment of sludge.

### Description of the drawings

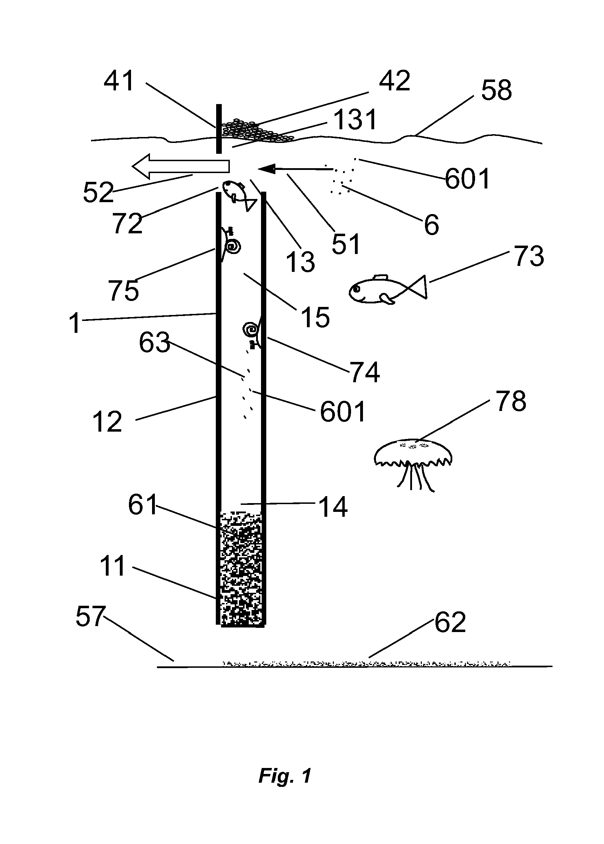

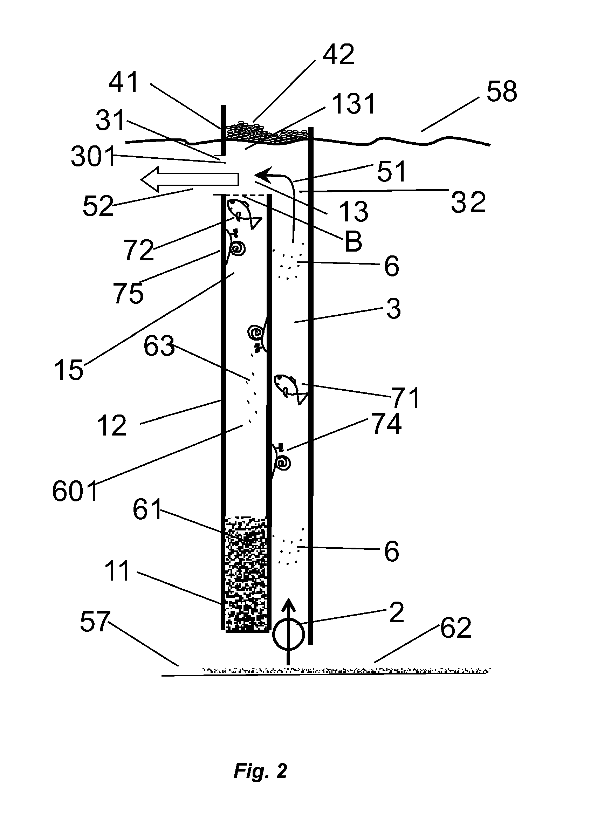

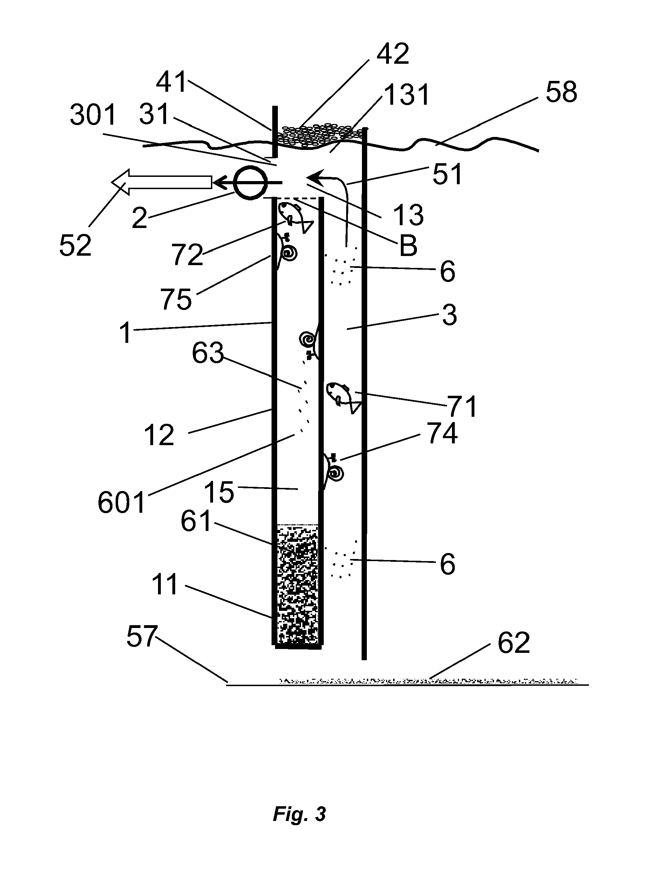

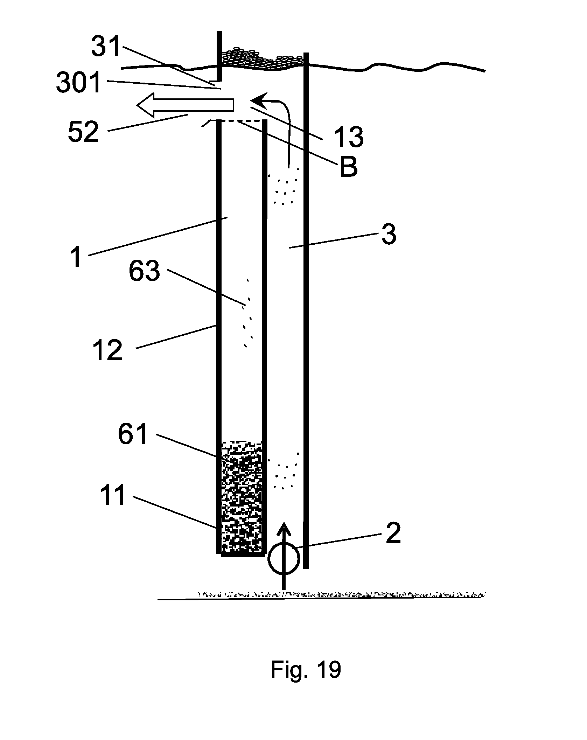

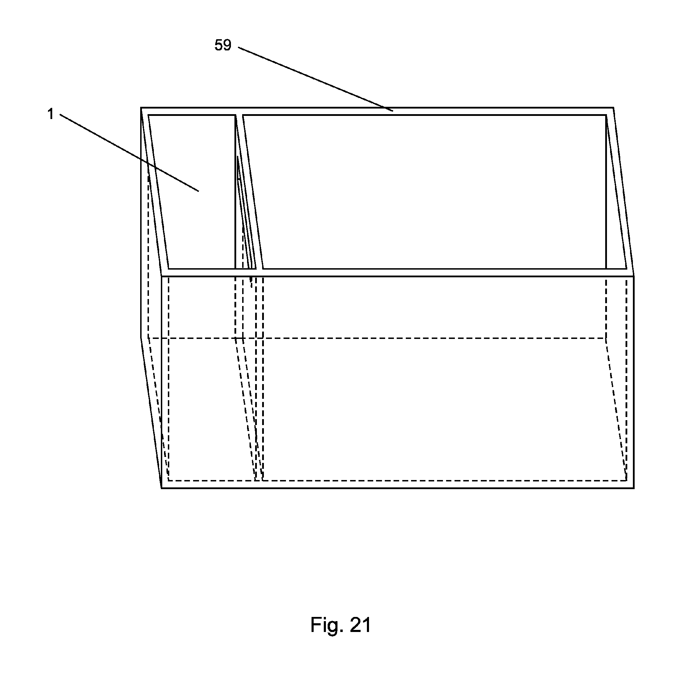

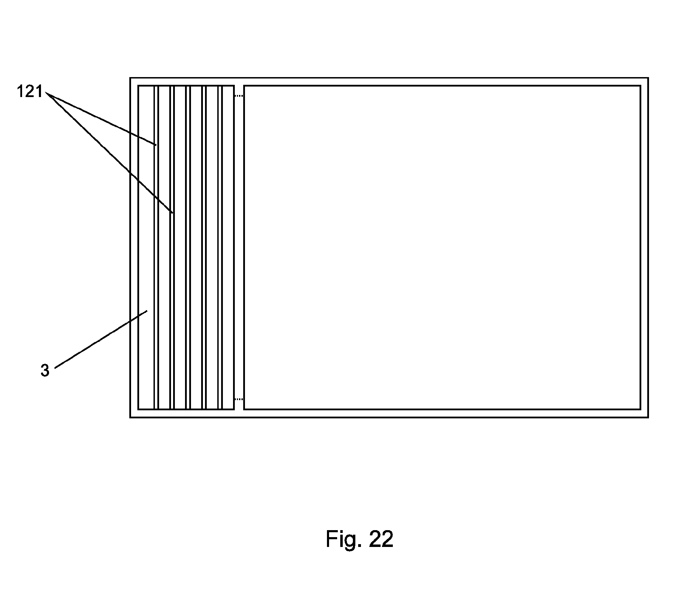

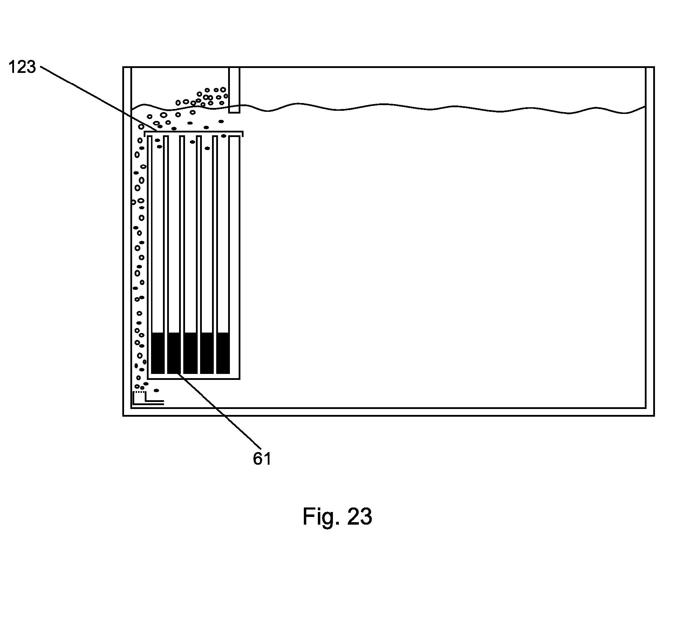

The invention is presented in a picture, where Fig. 1 illustrates the principle of the method for cleaning a water environment of sludge, Fig. 2 - shows a schematically presented device for cleaning a water environment of sludge with the driving module at a channel inlet, Fig. 3 - shows a diagram of the device with the driving module sucking in the water stream, Fig. 4 - shows a diagram of the device with a gas distribution member downstream the supply channel inlet, Fig. 5 - shows the application of a wall with a mirror-layer in the device, Fig. 6 - a cross-section through an oblong rectangular aquarium with the device located next to a wall, Fig. 7 and 8 - directions of water flows caused by the application of the device in an aquarium, Fig. 9 and 10 - show the device with a back channel and a water flow diagram if the device is located in an aquarium corner, in a top and a side view, Fig. 11 and 12 - show the device with side channels, located in an aquarium corner, in a top and a front view, Fig. 13 and 14 - show the free standing device with an axial channel, in a top and a side view, Fig. 15 and 16 - show the free standing device with the channel on a perimeter part, in a top and a side view, Fig. 17 - shows the device with a removable concentrated sludge container, Fig. 19 - shows a schematically presented device for cleaning a water environment of sludge with the chamber and the supply channel, in the basic variant, Fig. 21 - an aquarium with a separate integral part for the device, in a perspective view, Fig. 22 - the device constituting an integral aquarium part, in a top view, Fig. 23 - the device constituting an integral aquarium part, in a side view, Fig. 24 to Fig. 29 - various forms of chamber partitions, in a top view.

### Embodiments

The method of cleaning a water environment, in particular an aquarium or oceanarium, of sludge consists in intaking a concentrated stream 51 of water bearing sludge 6 and supplying it to the chamber 1. Water with sludge 6 is supplied above and/or to anupper zone 13 of the chamber 1, which in its lower part is a concentrated sludge 61 container 11. In the upper zone 13 water flows from the concentrated stream 51 direction and flows out with the outgoing stream 52 from above the stagnation zone 15.

The direction of the flow is horizontal, parallel to the water level and perpendicular to the height of the chamber,

The lowest layer of water flowing over the stagnation zone 15 only slightly disturbs the stagnation of the mixture of water with sludge particles 601. In these circumstances sludge 601 gravitates towards the lower 14 zone of the chamber 1. The concentrated sludge 61 is removed from the chamber 1 bottom periodically or continuously. To remove foamed bacteria and waste proteins in the foam 42 floating on the surface, the flow of water with sludge 601 particles in the near-surface upper layer is disturbed with a disturbing barrier 41 to the depth from 1 to 1,000 mm from the set water level 58 depending on the depth of the stagnation zone 15. Fish 72 and other creatures, e.g. snails 74, 75 may freely get into the chamber and leave it without any fear of being trapped.

The device made according to the invention has a chamber 1 connected to at least one supply channel 3, moreover the at least one supply channel 3 has an outlet 32 in an upper zone 13 of the chamber 1. In this upper zone 13 there is also an outlet 301 of the device. The outlet opening 301 of the device is located in this upper zone 13 such that the water stream 52 flowing from the outlet 32 of the supply channel 3 flows horizontally in the upper zone 13 in a direction parallel to the water level and perpendicular to the height of the chamber 1 towards the outlet opening 301 of the device.

In its lower part the chamber 1 with impervious walls 12 is a concentrated sludge 61 container 11. The chamber 1 is extended downwards from the upper zone 13 and the half of the total wall 12 area is at least a few times larger than the horizontal cross-section B area in the upper zone 13 of the chamber 1.

The device along with the chamber 1 and the supply channel 3 may be a replaceable module placed in an aquarium or an integral part of an aquarium. The chamber 1 is divided into compartments 120 set by vertical partitions 121. The partitions 121 are parallel to each other.

The partitions 121 may also have the form of flat bands or may have any shapes. In the cross-section the partitions 121 may outline a contour of any geometrical figures.

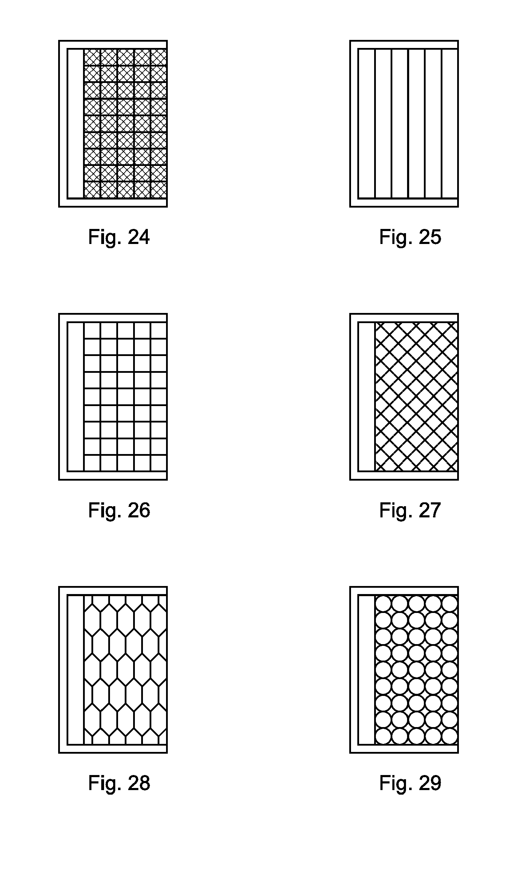

Fig. 24 to 29 show as an example a cross-section in the form of a grate with a mesh (Fig. 24) of parallel drawers (Fig. 25), a rectangular grate (Fig. 26), an askew grate (Fig. 27), a honeycomb (Fig. 28) and a sieve plate (Fig. 29).

The chamber 1 has a mesh 123 in its upper zone. The mesh may be removable.

Implementation of division of the chamber into compartments set by vertical partitions prevents fish and other inhabitants of the aquarium from getting inside the chamber. The chamber constitutes a stagnation zone, therefore a presence of any aquarium inhabitants would cause sludge dispersion. The mesh situated in the upper zone of the chamber performs an identical role.

The driving module 2 is located in the inlet 361 zone of the supply channel 3, advantageously on the whole length of the chamber 1. The supply channel 3 is connected to the driving module 2 or is the driving module 2. The driving module 2 in its simplest form is a section of the pipe 28 supplying gas with a distribution member 21 in the form of a perforated and/or porous water permeable coating.

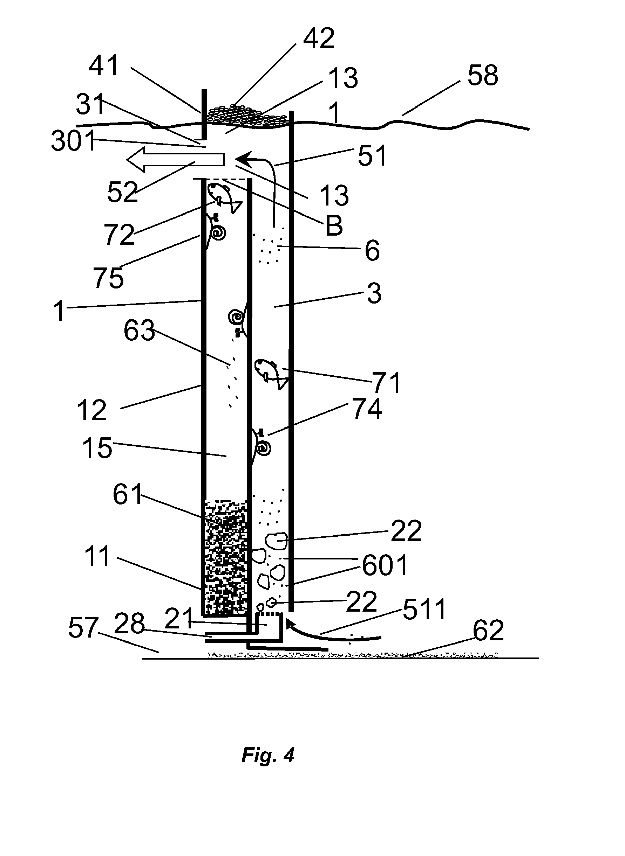

In general, the best method of forcing water movement in the device is to use a driving module 2 with lifting gas in a restricted space, as shown in Fig. 4. This unit covers the whole channel 3 supplying water to the chamber 1 or a segment of this channel near the chamber 1 with a significant height difference at the beginning and at the end of this segment. In water, below the channel inlet 361, or in the wall of the supply channel 3 or in the bottom wall of the supply channel 3, in the place where the channel bends from nearly horizontal to nearly vertical, the gas distribution member 21, advantageously air, oxygen, carbon dioxide or a mixture of them, is located. This distribution member 21 has the form of a porous pipe or an empty cubicoidal profile with perforated upper part, or any other form, so that when compressed gas is fed from the supply pipe 28, the distribution member 21 causes penetration of gas into the water in the form of fine bubbles 22.
In a system of this kind, water with gas bubbles 22, as having a lower specific gravity than pure water, because of the buoyant force exerted by water beyond the pipe, is lifted up and thus the flow of this water through the upper part of the chamber 1 is forced.
The sludge resting 62 on the bottom 57 is drawn into the supply channel 3 in the same direction as the incoming stream 511.

Above the water level 58, bubbles 22 flowing out to the surface form foam 42, which not only should be isolated from the rest of the environment cleaned, but seized and disposed outside, which very advantageously results in the foam skimmer function performed by the device. To this end, water flowing through the chamber 1 in its upper zone 13 is disturbed with a disturbing barrier 41, which causes gathering of foam 42 and enables to discharge the foam outside of the system.

In addition, the driving module 2 utilizing gas for lifting the water stream enables the device to perform the function of aeration, oxidizing or enriching water in carbon dioxide. Intensity of these functions may be very desirable. It is vital that the invention performs these functions reliably.
The lifting water with gas efficiency of the driving module 2 depends monotonously on the difference between the height of the cross-section bore through which water flows into the driving module and the lower edge of the bore through which water leaves the unit flowing into the chamber 1.

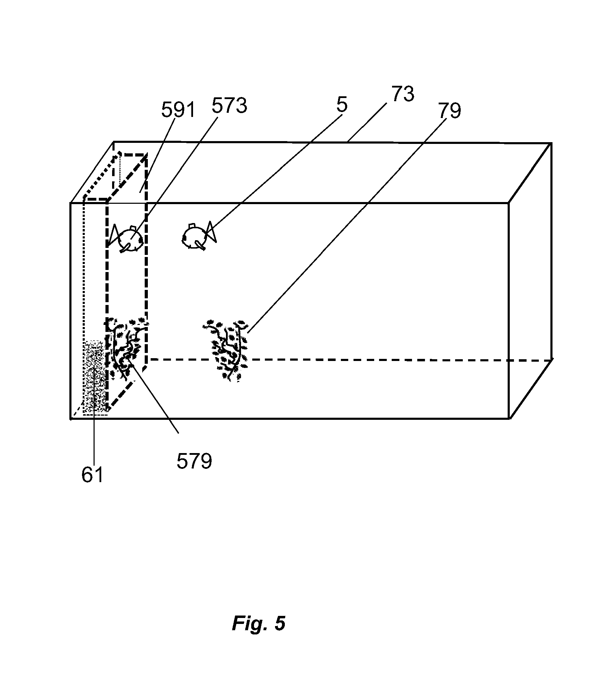

For optical isolation of the dark bed of gathered sludge, on the water environment 5 side the walls 12 of the chamber 1 have features of a mirror surface, as shown in Fig. 5. Thanks to a solution like this, lighting conditions of the environment near the chamber 1 structure improve. In addition the resulting environment depth is close to a natural impression. The wall 12 with a mirror layer 591 as the mirror wall 590 masks the container 11 and the bed of concentrated sludge deposited inside 61. Reflection of fish 573 and water plants 579 is visible on the mirror wall 590 with a mirror layer 591, so the water environment 5 dimensions increase optically.

The general pattern of water circulation, caused by the device operating in the water environment cleaned, is very important for the hydrodynamics of the environment cleaning. No water stagnation zones should occur in a well maintained water environment. The only such a zone should be the interior of the chamber 1 gathering sludge particles 601. In addition, there should be a tendency to carry sludge particles 601 suspended in water by water movements, possibly with a contribution of gravitation, towards the inlet 361 of the channel 3 supplying water to the chamber 1. Therefore location of this inlet 361, as well as the presence of an outlet channel 31, offtaking water from the upper zone 13 of the chamber 1 to some selected place of discharging it to the environment, as well as possible presence of directing members 35 directing the stream of outflowing water - depend on the shape of the tank or basin of the water environment 5 cleaned, and its nature, for example in the sense of a presence or lack of floating plants 79 canopy on the water surface.

### Example I

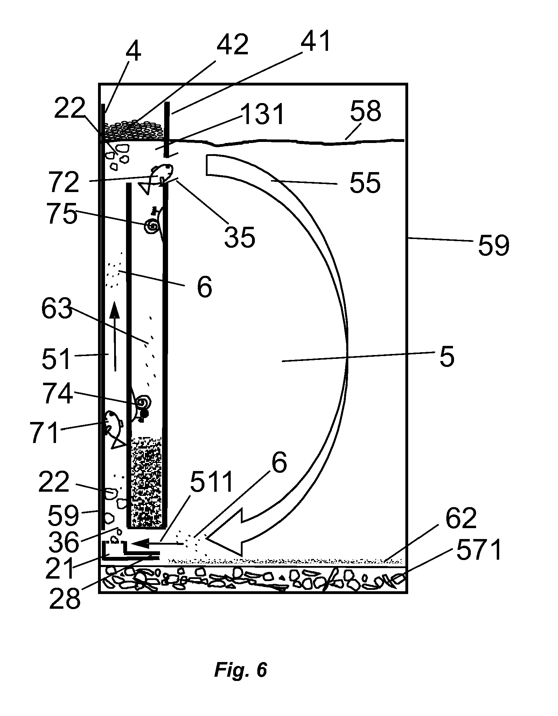

The device solution to be applied in a classic aquarium is illustrated in Fig. 6. The maximally flat structure of the device adjoins and occupies the entire smaller or the entire larger wall of the aquarium tank with walls 59. The water intake has the form of a supply channel 3 slot, running on a small height in water along the entire wall 59, over the substrate layer 571 surface on the water tank bottom, and in addition the distribution member 21 of the driving gas is laid on the substrate 571 surface. Water leaves the chamber 1 through a horizontal slot-like opening of the directing member 35, which directs water upwards. The operation of the device causes a slow horizontal eddy of the rotating stream 55 throughout the whole tank, gently sweeping the resting sludge 62 from the substrate 571 surface towards the water intake through the trap in the same direction as the incoming stream 511.

### Example II

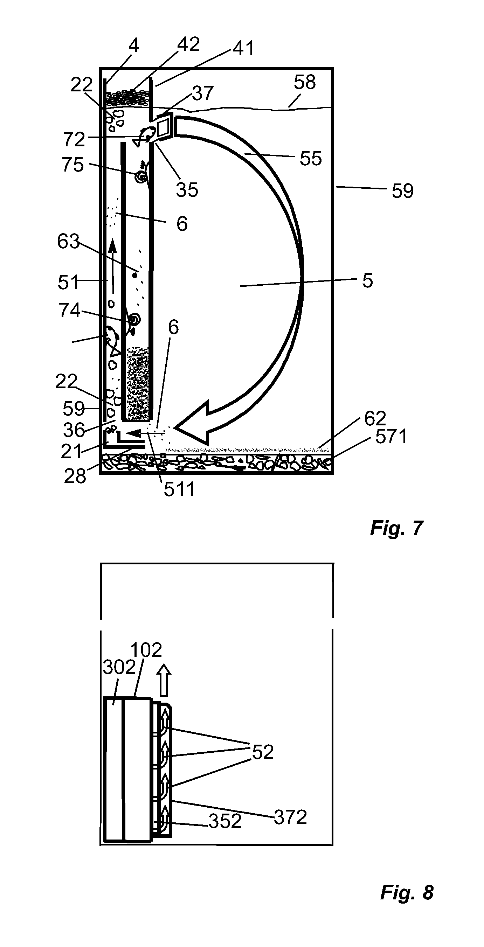

Another solution of the device to be applied in a classic aquarium is illustrated in Fig. 7 and Fig 8. The flat chamber 1, in the projection designated as structure 102, adjoins and occupies a part of the larger wall of the aquarium with walls 59, up to the corner. The water intake has the form of a slot as an inlet gap 36, running on low height in water along the aquarium wall, over the substrate layer 571 surface on the tank bottom, and in addition the distribution member 21 of the driving gas lies on the substrate 571 surface. Water leaves the chamber 1 through a horizontal slot-like opening of the directing member 37, 372. The directing member 37, 372 directs water tangentially along the upper zone of the bigger aquarium wall 59, which the device adjoins, horizontally towards the place where the aquarium wall 59 is free, that is not occupied by the adjoining device structure. The operation of the device generates a slow twisted geometry eddy of water with swirling sludge 65 throughout the whole tank, gently sweeping the resting sludge 62 from the substrate 571 surface towards the water intake through the supply channel 3.

### Example III

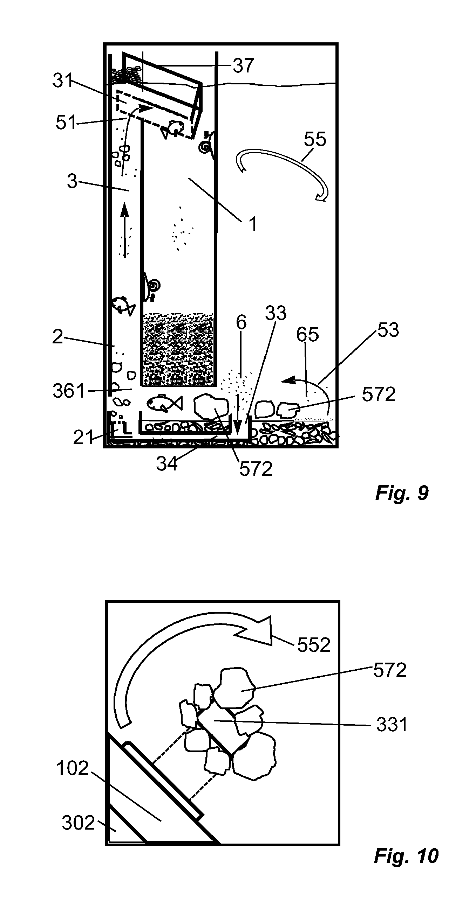

Another solution of the device may be applied mainly in a square base aquarium. The structure 102, of a triangular vertical projection, occupies a tank corner, particularly in an aquarium like the one shown in Fig. 9 and 10. The water intake 33 has the form of a hole, located horizontally and elevated above the substrate 571 surface, masked with rock chips 572 placed in the centre of the bottom tank zone. The channel 34 leading water to the supply channel 3 goes horizontally and is buried in the substrate 571. The horizontal section of the leading channel 34 is a mechanically separate unit and ends in the corner with its own outlet, placed horizontally, having a form of a triangular gap in the channel ceiling. The porous distribution member 21 of the driving gas is mounted here. The triangular shape of the gap relates to the triangular inlet 361 opening of the vertical section of the supply channel 3, at the same time in this version constituting the main part of the water driving module 2.

At the top water pours into the chamber 1, which has a trapezoidal horizontal cross-section, in the same direction as the concentrated stream 51, which leaves the chamber 1 through an outlet channel 31 with a directing member 37, which directs the stream horizontally tangentially to the wall 59 in the upper zone of the tank, in particular an aquarium. The operation of the device generates a slow water eddy throughout the whole tank (in the vertical projection) designated as 552 and favouring detaching of the resting sludge 62 from the bottom. The eddy causes lifting of the swirling sludge 65 in the bottom zone of the water tank (aquarium) and moving it towards the water intake 33 located near the tank centre, in the same direction as the water bottom stream 53.

### Example IV

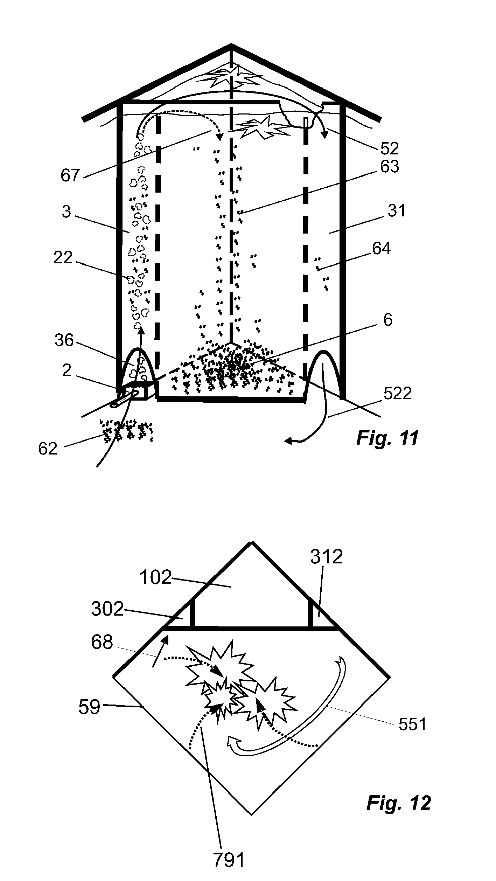

Another solution of the device may be used in a classic aquarium with the water surface occupied by plants freely floating 79 on the surface. The chamber structure 102, of a triangular vertical projection, occupies a corner of the aquarium with walls 59, as shown in Fig. 11 and Fig. 12. The water intake has the form of a horizontally located triangular inlet gap 36 on a small height in water, but not in the tank corner, here occupied by the chamber 1 of a horizontal cross-section covered by a rectangle and a triangle (the corner zone).

The supply channel 3, designated in the vertical projection as 302, occupies the triangular corner of the acute corner of the whole structure 102 including the tank 102, which is triangular in the vertical projection, whereas the outlet channel 31, designated in the top projection as 312, occupies the triangular acute corner of the device structure on the opposite side. Under the inlet gap 36 into the vertical channel 302 supplying water into the structure 102, the gas, in particular air, distribution member 21 rests on the substrate 571. The sludge taken out 66 supplied with the supply channel 3 gravitates to the chamber 1 in the settling direction 67. At the top, water leaving the structure 102 flows in with the outgoing stream 52 into the outlet channel 312, adjacent to the structure 102 on the opposite side as the channel 302 supplying and driving water.

The outlet channel 31 leads water downwards with the outgoing stream 52, and in the bottom zone it releases water through the outlet gap to the aquarium water environment 5 in the same direction as the bottom stream 53. The bottom stream 53 is directed horizontally tangentially to the tank wall. The operation of the device generates a slow water eddy throughout the whole tank in the same direction as the lifting stream 551. This eddy so to speak spreads the sludge 6 to corners, in particular driving it to the corner with the inlet gap 36 of the channel 3 supplying water to the chamber 1. Water in the eddy raises at the tank walls and in the upper zone, in the same direction as the rotation stream 791, advantageously pushes the floating plant 79 raft away from the tank walls 59, making possible and setting the plant agglomeration in slow and very advantageous rotary motion.

### Example V

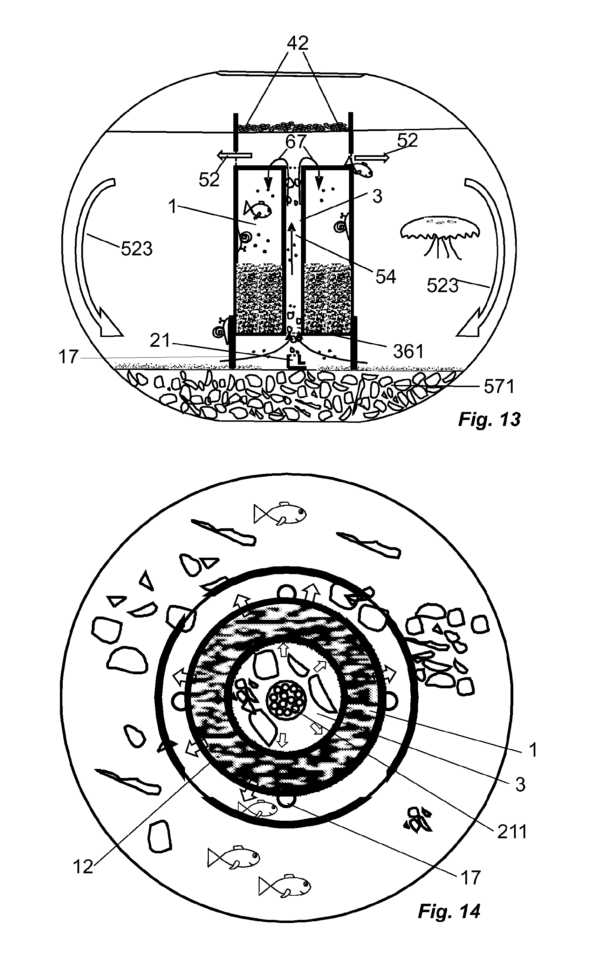

Another solution of the centrally located device to be applied in an aquarium of a spherical or cylindrical shape is presented in Fig. 13 and Fig. 14. The device structure in the vertical projection is round or at least rounded, oval. The channel 3, designated in the vertical projection as 302, being the driving module 2 and supplying water with sludge 6 to the chamber 1 in the same direction as the lifting stream 54 occupies the central axial position. The inlet 361 constituting the water intake is located on a small height above the substrate 571 surface, on which the gas distribution member 21 lies, the gas being air. The device is additionally connected with the mount 17 in a separable manner.

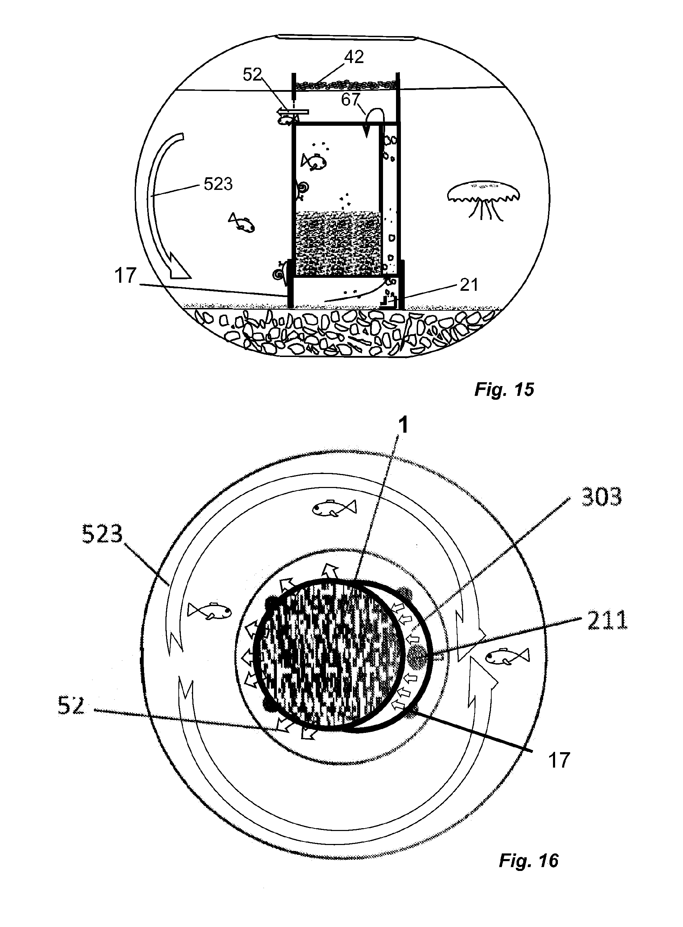

The chamber 1 designated in the vertical projection as 102, surrounds the supply channel 3 or in the projection onto the mount plane it has a shape of a sickle tangential to the supply channel 3, as shown in Fig. 16. The outgoing water stream 52 leaving the chamber 1 in the upper zone is released horizontally, and then in the same direction as the all around stream 523 or distributed in the sickle shape 303, as shown in Fig. 16. The all around geometry of the outgoing stream 52 release favours efficient shifting of the not deposited sludge 64 towards the water intake to the supply channel 3.

### Example VI

A solution of the device to be applied in marine aquaria simulating conditions in the intertidal zone may be derived from any of the versions discussed earlier. In this case it is important: the height of characteristic elements of the device structure above the cleaned water environment 5 bottom 57, namely the threshold or bottom of water overflow from the supply channel 3 to the chamber 1, the threshold or bottom of water outlet from the chamber 1, the upper limit of the water outlet bore from the chamber 1, which must always remain under the water level 58 to prevent foam 42 release, must be adjusted to the assumed minimum water level 58. Lowering of the height of location of the mentioned elements governing the water flow through the device results in a reduction of water flow efficiency, in particular of concentrated sludge 61 container 11 capacity. The solution takes into account the change in the environment cleaning hydrodynamics, from hydrodynamics typical to the basic version of the device, applicable for a low water level, to untypical disturbed hydrodynamics for a high water level.

### Example VII

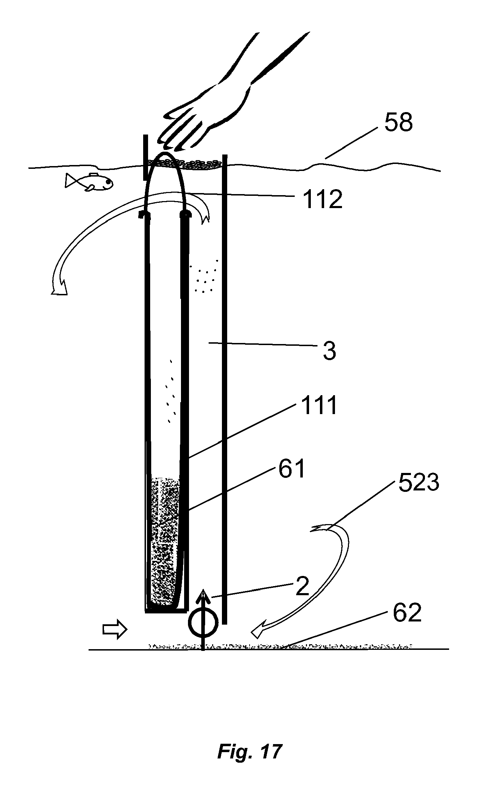

The device to be applied in miniature decorative ponds is illustrated in Fig. 17. The invention embodiment of this kind is derived from any of versions discussed earlier. It is important that the chamber 1 design is complemented by an insert 111, which is either stiff in the form of a box or advantageously soft in the form of a bag, advantageously fitted with holders 112 facilitating removal of the insert 111 with collected concentrated sludge 61 by mechanical lifting of the internal insert 111. Having removed the concentrated sludge 61, which can be utilized for instance for agricultural cultivations due to its fertilizing value, the insert 111 filled with clean water can easily be put back into the device chamber 1.

If the described solutions according to the invention are applied, a drastic reduction in labour intensity of operation and maintenance or commonly known kinds of water environments is obtained. In addition, breeding of creatures so far impossible or extremely difficult to breed due to their dependence on plankton feeding, like marine jelly fish in amateur aquaria, shark fish in oceanaria, clams in ordinary home fish tanks becomes possible at all or is made much easier. Moreover, it is also possible to maintain high ecological quality of artificial water environments, of which small organisms staying in water depths are a significant biotic component. Also a commercial activity, such as fish breeding and fry raising can be improved very much.

## Claims

1. Method of cleaning a water environment, in particular an aquarium, a decorative miniature pond or oceanarium, of sludge, consists in intaking a water stream bearing sludge near the bottom of the water environment and supplying it to a chamber arresting and collecting sludge, **characterized in that** water with sludge is supplied to the upper zone of the chamber where it flows through and off the chamber from above a stagnation zone of the chamber, the direction of the flow being horizontal, parallel to the water level and perpendicular to the height of the chamber where stagnation of the water and sludge mixture remains, and in these circumstances of an upper stream flow in the chamber and simultaneous lower stagnation in the volume of the chamber, the sludge gravitates from the horizontal water stream towards the chamber bottom, where it is periodically or continuously removed from.

2. Method as claimed in claim 1, **characterized in that** the flow of water with sludge in the surface upper layer is disturbed to the depth from 1 to 1,000 mm depending on the stagnation zone depth, advantageously to 10 mm.

3. Device for cleaning a water environment, in particular an aquarium, decorative miniature pond or oceanarium, of sludge, having a chamber (1) connected to a supply channel (3) for a water stream bearing sludge and a water driving module, **characterized in that** at least one supply channel (3) has an outlet (32) in an upper zone (13) of the chamber (1), and an outlet opening (301) of the device is located in this upper zone (13) such that the water stream (52) flowing from the outlet (32) of the supply channel (3) flows horizontally in the upper zone (13) in a direction parallel to the water level and perpendicular to the height of the chamber (1) towards the outlet opening (301) of the device, and in the lower zone of the chamber (1) provided with impervious walls (12) there is a container (11) for concentrated sludge (61).

4. Device as claimed in claim 3, **characterized in that** at least one supply channel (3) and/or its outlet (32) is placed inside the chamber (1) and/or adjacently to the chamber (1) wall (12).

5. Device as claimed in claim 3 **characterized in that** at least one chamber (1) wall (12) has a mirror layer (591) on its surface.

6. Device as claimed in claim 3, **characterized in that** the sludge container (11) is a separable part of the chamber (1).

7. Device as claimed in claim 3, **characterized in that** the chamber (1) is extended downwards from the upper zone (13) and the half of the total wall (12) area of the chamber is at least a few times larger than the horizontal cross-section (B) area in the upper zone (13) of the chamber (1).

8. Device as claimed in claim 3, **characterized in that** along with the chamber (1) and the supply channel (3) it constitutes an integral part of aquarium.

9. Device as claimed in claim 3, **characterized in that** along with the chamber (1) and the supply channel (3) it constitutes a replaceable module put into an aquarium.

10. Device as claimed in claim 8 or 9, **characterized in that** the chamber (1) is divided into compartments (120) set by vertical partitions (121).

11. Device as claimed in claim 10, **characterised in that** the partitions (121) are parallel.

12. Device as claimed in claim 10, **characterised in that** the partitions (121) are of varied lengths.

13. Device as claimed in claim 10, **characterized in that** the chamber (1) in its upper zone has a mesh (123).

14. Device as claimed in one of claims 8 to 13, **characterized in that** the water driving module (2) is in the form of a supply channel (3) section, wherein a gas distribution member (21) with a perforated or porous coating advantageously on the chamber's (1) length is located at its inlet, and wherein advantageously the gas is air or oxygen.

15. Device as claimed in one of claims 8 to 13, **characterized in that** it is additionally connected to its mount (17) in a separable manner and is accommodated in a contour similar to a sphere, cubicoid, cylinder or pyramid.

## Patentansprüche

1. Verfahren zum Entfernen von Schlamm aus einer Wasserumgebung, insbesondere einem Aquarium, Minizierbecken oder Ozeanarium, beruhend auf der Aufnahme des durch den Wasserstrahl aus der Nähe der Sohle der Wasserumgebung mitgeführten Schlamms und dessen Zuleitung zu einer für das Zurückhalten und Absetzen von Schlamm vorgesehenen Kammer, **dadurch gekennzeichnet, dass** das den Schlamm mitführende Wasser der oberen Kammerzone zugeleitet wird, durch diese durchströmt und über die Stagnationszone der Kammer hinweg aus der Kammer abfließt, wobei die Abflussrichtung horizontal, parallel zum Wasserspiegel und vertikal zur Höhe der Kammer, in der die zum Stillstand gekommene Wasser-Schlamm-Mischung gehalten wird, liegt, und der Schlamm unter diesen Umständen - Durchfluss des Wasserstroms im oberen Teil der Kammer und gleichzeitige Wasserstagnation im unteren Teil der Kammer - aus dem horizontal durchfließenden Wasserstrahls gravitationsmäßig in Richtung des Kammerbodens sinkt, von wo aus er periodisch bzw. fortlaufend beseitigt werden kann.

2. Verfahren gemäß Anspruch 1, **dadurch gekennzeichnet, dass** die Durchströmung der Wasser-Schlamm-Mischung oben in der oberflächenahen Wasserschicht je nach der Dicke der Stagnationszone bis zur Tiefe von 1 bis zu 1000 mm, vorteilhaft bis zur Tiefe von 10 mm, gestört wird.

3. Vorrichtung zum Entfernen von Schlamm aus einer Wasserumgebung, insbesondere einem Aquarium, Minizierbecken oder Ozeanarium, bestehend aus einer Kammer (1), die mit einem Kanal (3) für die Zuleitung des den Schlamm mitführenden Wasserstrahls versehen ist und ein Wasserantriebsmodul besitzt, **dadurch gekennzeichnet, dass** zumindest ein Zuleitungskanal (3) in der oberen Zone (13) der Kammer (1) eine Mündung (32) aufweist, und in der oberen Zone (13) der Vorrichtung sich ein Auslauf (301) befindet, so dass der Wasserstrahl (52), der aus dem Auslauf (32) des Kanals (3) ausströmt, in der oberen Zone (13) horizontal, parallel zum Wasserspiegel und vertikal zur Höhe der Kammer (1), in Richtung des Auslaufs (301) der Vorrichtung hinaus fließt, und in dem unteren Teil der Kammer (1), die wasserdichte Wände (2) hat, ein Behälter (11) für aggregierten Schlamm (61) angebracht ist.

4. Vorrichtung gemäß Anspruch 3, **dadurch gekennzeichnet, dass** zumindest ein Leitungskanal (3) und/oder dessen Auslauf in der Mitte der Kammer (1) und/oder an die Wand (12) der Kammer (1) anliegend angebracht ist.

5. Vorrichtung gemäß Anspruch 3, **dadurch gekennzeichnet, dass** zumindest eine Wand (12) der Kammer (1) mit einer Spiegelschicht (591) belegt ist.

6. Vorrichtung gemäß Anspruch 3, **dadurch gekennzeichnet, dass** der Schlammbehälter (11) und die Kammer (1) miteinander trennbar verbunden sind.

7. Vorrichtung gemäß Anspruch 3, **dadurch gekennzeichnet, dass** die Kammer (1) sich von der oberen Zone (13) aus nach unten zieht, und die summarische Fläche der Wände (12) der Kammer mindestens mehrfach größer als der Querschnitt (B) in der oberen Zone (13) der Kammer (1) ist.

8. Vorrichtung gemäß Anspruch 3, **dadurch gekennzeichnet, dass** sie zusammen mit der Kammer (1) und dem Zuleitungskanal (3) einen integralen Teil des Aquariums darstellt.

9. Vorrichtung gemäß Anspruch 3, **dadurch gekennzeichnet, dass sie** zusammen mit der Kammer (1) und dem Zuleitungskanal (3) ein austauschbares Modul, das in das Aquarium gesetzt wird, darstellt.

10. Vorrichtung nach einem der Ansprüche 8 - 9, **dadurch gekennzeichnet, dass** die Kammer (1) in Abteilungen (120) aufgeteilt ist, die durch vertikale Scheidewände ausgesondert werden.

11. Vorrichtung gemäß Anspruch 10, **dadurch gekennzeichnet, dass** die Scheidewände (121) parallel zueinander liegen.

12. Vorrichtung gemäß Anspruch 10, **dadurch gekennzeichnet, dass** die Scheidewände (121) verschiedene Länge haben.

13. Vorrichtung gemäß Anspruch 10, **dadurch gekennzeichnet, dass** die Kammer (1) in ihrer oberen Zone ein Netz (123) hat.

14. Vorrichtung nach einem der Ansprüche von 8 bis 13, **dadurch gekennzeichnet, dass** das Wasserantriebsmodul (2) die Form eines Zuleitungskanals (3) aufweist, an dessen Einlauf sich ein Verteilungselement (21) von Gas, vorteilhaft Luft oder Sauerstoff, mit perforiertem Überzug, vorteilhaft auf der ganzen Länge der Kammer (1), befindet.

15. Vorrichtung nach einem der Ansprüche von 8 bis 13, **dadurch gekennzeichnet, dass** sie zusätzlich mit einem Gestell (17) trennbar verbunden ist und in einen Umriss, der einer Kugel, einem Quader, einem Zylinder oder einer Pyramide ähnelt, hineinpasst.

## Revendications

1. Procédé de nettoyage de boue d'un milieu aquatique, en particulier un aquarium, un bassin décoratif miniature ou un océanarium consistant à capter le flux d'eau transportant la boue à proximité du fond du milieu aquatique et à l'amener à la chambre arrêtant et accumulant la boue, **caractérisée en ce que** l'eau avec la boue est amenée dans la zone supérieure de la chambre, par laquelle elle passe et elle sort de la chambre au-dessus de la zone de stagnation de la chambre, l'axe de la bouche de l'eau est horizontal, parallèle au niveau de l'eau et perpendiculaire à la hauteur de la chambre où est maintenue la stagnation du mélange de l'eau avec la boue et dans ces conditions du passage du flux de l'eau dans la zone supérieure dans la chambre et de la stagnation simultanée dans la zone inférieure de la chambre, la boue descend par gravité du flux d'eau horizontal vers le fond de la chambre, d'où elle est enlevée périodiquement ou en continu.

2. Procédé selon la revendication 1, **caractérisée en ce que** l'écoulement de l'eau avec la boue la couche supérieure près de la surface est troublé à une profondeur de 1 à 1000 mm en fonction de la profondeur de la zone de stagnation, avantageusement do 10 mm.

3. Le dispositif de nettoyage de boue d'un milieu aquatique, en particulier un aquarium, un bassin décoratif miniature ou un océanarium, possédant une chambre (1) reliée à un canal (3) amenant le flux d'eau avec la boue, et possédant un module d'entraînement de l'eau, **caractérisée en ce que** au moins un canal d'amenée (3) possède la bouche (32) dans la zone supérieure (13) de la chambre (1) et dans cette zone supérieure (13) se trouve la sortie (301) du dispositif, et ainsi le flux (52) sortant de la bouche (32) du canal (3) coule horizontalement dans la zone supérieure (13) dans la direction parallèle au niveau de l'eau et perpendiculaire à la hauteur de la chambre (1), dans la direction vers la sortie (301) du dispositif et, dans la partie inférieure de la chambre (1) dont les parois sont étanches (12) est situé un réservoir (11) de boue accumulée (61).

4. Le dispositif selon la revendication 3, **caractérisée en ce que** au moins un canal d'amenée (3) et/ou une de ses bouches est placée à l'intérieur de la chambre (1) et/ou tangentiellement à la paroi (12) de la chambre (1).

5. Le dispositif selon la revendication 3, **caractérisée en ce que** au moins une paroi (12) de la chambre (1) possède, sur sa surface, une couche de miroir (591).

6. Le dispositif selon la revendication 3, **caractérisée en ce que** le réservoir (11) de boue est relié de façon amovible avec la chambre (1).

7. Le dispositif selon la revendication 3, **caractérisée en ce que** la chambre (1) est étirée vers le bas de la zone supérieure (13) et la moitié de la superficie totale des parois (12) de la chambre est au moins plusieurs fois plus grande que la section transversale horizontale (B) dans la zone supérieure (13) de la chambre (1).

8. Le dispositif selon la revendication 3, **caractérisée en ce que** avec la chambre (1) et le canal d'amenée (3) font partie intégrante de l'aquarium.

9. Le dispositif selon la revendication 3, **caractérisée en ce que** avec la chambre (1) et le canal d'amenée (3) un module amovible placé dans l'aquarium.

10. Le dispositif selon la revendication 8 ou 9, **caractérisée en ce que** la chambre (1) est séparée en compartiments (120) délimités par des cloisons verticales (121).

11. Le dispositif selon la revendication 10, **caractérisée en ce que** les cloisons (121) sont parallèles.

12. Le dispositif selon la revendication 10, **caractérisée en ce que** les cloisons (121) sont de différentes longueurs.

13. Le dispositif selon la revendication 10, **caractérisée en ce que** la chambre (1) dans sa zone supérieure possède un filet (123).

14. Le dispositif selon l'une des revendications de 8 à 13, **caractérisée en ce que** le module d'entraînement (2) de l'eau est sous la forme d'un tronçon du canal d'amenée (3), à l'entrée duquel se trouve un élément de distribution (21) de gaz, avantageusement d'air ou d'oxygène, avec une surface perforée ou poreuse avantageusement sur la longueur de la chambre (1).

15. Le dispositif selon l'une des revendications de 8 à 13, **caractérisée en ce qu'il** est de plus relié de façon amovible avec le socle (17) et qu'il entre dans le contour proche de la sphère, du parallélépipède rectangle, du cylindre ou de la pyramide.
